# EUROPÄISCHE PATENTSCHRIFT

(11) **EP 2 759 042 B1**
(45) Veröffentlichungstag und Bekanntmachung des Hinweises auf die Patenterteilung: **12.09.2018**
(21) Anmeldenummer: 12735206.0
(22) Anmeldetag: 02.07.2012
(51) Int. Cl.: H02K 5/128, H02K 11/25, H02K 49/10, F04D 13/02, F04D 13/06, F16D 27/14

(54) **SPALTTOPF FÜR EINE MAGNETKUPPLUNG MIT VERBESSERTER FLUIDSTRÖMUNG**
SPLIT CASE FOR A MAGNETIC COUPLING HAVING IMPROVED FLUID FLOW
CHEMISE D'ENTREFER POUR ACCOUPLEMENT MAGNÉTIQUE À ÉCOULEMENT FLUIDIQUE AMELIORÉ

(30) Priorität: 22.09.2011 DE 102011114191
(43) Veröffentlichungstag der Anmeldung: 30.07.2014
(73) Patentinhaber: EagleBurgmann Germany GmbH & Co. KG, 82515 Wolfratshausen (DE)
(72) Erfinder: ERTL, Martin, 82541 Holzhausen (DE); PFEIL, Dieter, 82547 Eurasburg (DE); SCHERER, Hans-Georg, 82538 Geretsried (DE)
(74) Vertreter: Hoefer & Partner Patentanwälte mbB
(86) Internationale Anmeldenummer: PCT/EP2012/002776
(87) Internationale Veröffentlichungsnummer: WO 2013/041161

(56) Entgegenhaltungen:
- WO-A-89/03722
- DE-A1- 2 515 634
- DE-A1- 4 238 132
- DE-A1- 10 130 333
- GB-A- 2 123 706
- JP-A- H1 113 681
- JP-A- 2003 184 787
- US-A- 5 195 867
- US-A- 5 240 327
- US-A- 5 782 556

## Beschreibung

Die vorliegende Erfindung betrifft eine Magnetkupplung mit einem Spalttopf mit einer verbesserten Fluidströmung.

Spalttöpfe sind aus dem Stand der Technik in verschiedenen Ausgestaltungen bekannt und werden beispielsweise bei Magnetkupplungen zur Abdichtung von Pumpen oder Rührwerken verwendet. Ein Antriebsdrehmoment wird dabei durch magnetische Feldkräfte durch den Spalttopf hindurch übertragen. Im Betrieb kann nun insbesondere an einer Innenseite eines Bodens des Spalttopfs ein verstärkter Verschleiß auftreten, insbesondere, wenn der Spalttopf einem Kontakt mit einem abrasiven Medium, beispielsweise einem mit Feststoffen versetzten Fluid, ausgesetzt ist. Hierbei können Auswaschungen des Spalttopfes bis hin zu einem vollständigen Abtragen von Spalttopfmaterial auftreten, was zu unerwünschten Undichtigkeiten der Magnetkupplung führt. Auch kann ein Verschleiß aufgrund von Kavitation auftreten. Ferner ist aus der EP 1 719 914 A2 ein Spalttopf bekannt, welcher einen gewölbten Blechboden mit einer am Boden vorgesehenen zentralen Eindrückung bekannt. Eine derartige Eindrückung wird zur mechanischen Stabilisierung des dünnen Blechbodens des Spalttopfs verwendet.

Die US 5,782,556 B zeigt einen Mixbehälter, welcher an einem Boden eine hohle, domartige Erhebung aufweist. An einer Bodeninnenseite sind keine Wirbelbrecheinrichtungen vorgesehen.

Die GB 2 123 706 A zeigt ein Behältnis mit einem hohlen Konus, wobei an einer Bodeninnenseite keine Wirbelbrecheinrichtungen vorgesehen sind.

Die DE 25 15 634 zeigt einen Rührmagnet mit einem innerhalb eines Gefäßes angeordneten stabförmigen Rührmagneten.

Die US 5,240,327 A zeigt ein Behältnis zum Mischen, bei dem am Bodeninneren ein hohler Konus angeordnet ist und ein flügelartiges Rührwerk vorgesehen ist.

Es ist Aufgabe der vorliegenden Erfindung, eine Magnetkupplung mit einem Spalttopf bereitzustellen, welche bei einfachem Aufbau und einfacher, kostengünstiger Herstellbarkeit eine unerwünschte Beschädigung des Spalttopfs durch Auswaschungen verhindert.

Diese Aufgabe wird durch eine Magnetkupplung mit den Merkmalen des Anspruchs 1 gelöst, die Unteransprüche zeigen bevorzugte Weiterbildungen der Erfindung.

Die erfindungsgemäße Magnetkupplung mit einem Spalttopf mit den Merkmalen des Anspruchs 1 weist den Vorteil auf, dass ein unerwünschter Verschleiß am Boden des Spalttopfs aufgrund von Kavitation und/oder abrasiven Medien vermieden werden kann. Hierdurch kann eine Lebensdauer des Spalttopfes verlängert werden. Dies wird erfindungsgemäß dadurch erreicht, dass am Boden des Spalttopfs an einer zum Spalttopf nach innen gerichteten Bodeninnenseite ein massiver Konus angeordnet ist, welcher koaxial zu einer Mittelachse des Spalttopfes ausgerichtet ist. Der massive Konus beeinflusst im Betrieb eine Strömung des Mediums im Spalttopfinneren derart, dass insbesondere stehende Wirbel, welche durch die Rotation des inneren Magnetrotors hervorgerufen werden, vermieden werden können. Durch die Anordnung des massiven Konus am Boden des Spalttopfes wird somit gezielt die Strömung im Betrieb im Inneren des Spalttopfes beeinflusst, so dass Schäden am Spalttopfboden verhindert werden können. Ferner umfasst der Spalttopf eine Wirbelbrecheinrichtung, welche an der Bodeninnenseite des Spalttopfs angeordnet ist und von der Bodeninnenseite vorsteht. Durch die erfindungsgemäße Wirbelbrecheinrichtung am Boden des Spalttopfs wird im Betrieb die Strömung des Fluids im Inneren des Spalttopfs derart beeinflusst, dass Wirbel im Inneren des Spalttopfs erst gar nicht gebildet werden oder durch die Wirbelbrecheinrichtung zur Ablösung vom Boden gezwungen werden und somit aufgelöst werden. Insbesondere soll an der Bodeninnenseite ein hydraulisch glatter

Boden entstehen und eine turbulente Strömung direkt an der Bodeninnenseite verhindern.

Weiter bevorzugt ist die Wirbelbrecheinrichtung ein Längselement. Das Längselement ist bevorzugt ein rechteckiger Block oder ein trapezförmiger Block oder ein Halbellipsoid. Weiter bevorzugt sind die Enden des Längselements abgerundet oder abgeflacht ausgebildet. Um die Wirbelbrecheinrichtung möglichst einfach und kostengünstig herstellen zu können, ist diese vorzugsweise als rechteckiger Block ausgebildet.

Vorzugsweise weist die Wirbelbrecheinrichtung eine Längsachse auf, welche in radialer Richtung des Spalttopfs ausgerichtet ist. Alternativ verläuft eine Längsachse des Längselements in einem Anstellwinkel zur radialen Richtung. Dadurch wird besonders die Ausbildung einer laminaren Strömung an der Bodeninnenseite gefördert. Vorzugsweise umfasst der Spalttopf genau zwei Wirbelbrecheinrichtungen, welche am Boden des Spalttopfs um 180° einander gegenüberliegend angeordnet sind.

Weiter bevorzugt ist die Wirbelbrecheinrichtung ein Zylinderelement oder ein Kegelelement oder ein Polyeder. Dabei sind besonders bevorzugt eine Vielzahl von Zylinderelementen und/oder Kegelelementen und/oder Polyeder an der Bodeninnenseite vorgesehen, um die Strömung zu beeinflussen. Weiter bevorzugt weist die Wirbelbrecheinrichtung wenigstens eine, in einem Winkel zur Bodeninnenseite geneigte Fläche auf. Der Winkel liegt vorzugsweise in einem Bereich zwischen 15 ° und 75° und beträgt besonders bevorzugt 45°.

Um möglichst wenig Strömungsverluste zu erzeugen, weist der massive Konus vorzugsweise eine abgerundete Spitze auf. Besonders bevorzugt ist die abgerundete Spitze mit einem konstanten Radius gebildet. Alternativ ist die abgerundete Spitze derart gebildet, dass an einem äußersten Ende eine vorzugsweise kreisförmige Abflachung ausgebildet ist. Hierdurch kann eine axiale Länge des massiven Konus reduziert werden und trotzdem eine strömungsgünstige Form des Konus beibehalten werden.

Weiter bevorzugt weist der Spalttopf an einer äußeren Bodenseite eine Ausnehmung zur Aufnahme einer Temperaturmesseinrichtung auf. Die Ausnehmung ist vorzugsweise koaxial zur Mittelachse des massiven Konus angeordnet und vorzugsweise zumindest teilweise, besonders bevorzugt vollständig, in den massiven Konus geführt. Hierdurch ist es möglich, zusätzlich noch eine Temperaturmesseinrichtung in den Spalttopfboden zu integrieren, ohne dass dabei die Dicke eines Spalttopfbodens erhöht werden muss. Die Temperaturmesseinrichtung kann somit einfach teilweise oder vollständig im massiven Konus untergebracht werden, so dass eine sehr kompakte Bauform des Spalttopfes mit integrierter Temperaturmesseinrichtung erreicht wird.

Weiter bevorzugt ist ein Übergang vom massiven Konus zu einer Bodeninnenseite des Spalttopfs mit einem zweiten Radius gebildet. Ferner ist vorzugsweise ein Übergang von der Bodeninnenseite zum zylindrischen Mantelbereich des Spalttopfs mit einem dritten Radius gebildet. Besonders bevorzugt sind dabei der erste Radius der abgerundeten Spitze des massiven Konus, der zweite Radius und der dritte Radius gleich gewählt.

Weiter bevorzugt ist ein Verhältnis einer Länge des Konus in Axialrichtung des Spalttopfs, ausgehend von der Bodeninnenseite, zu einer Dicke des Bodens zwischen 3 und 4 und liegt insbesondere zwischen 3,4 und 3,8, und ist insbesondere ungefähr 3,6. Bei Einhaltung dieses Verhältnisses tritt im Betrieb fast kein Verschleiß auf.

Weiter bevorzugt liegt ein Verhältnis eines Innendurchmessers des Spalttopfs zu einem Grunddurchmesser des Konus zwischen 5 und 7, insbesondere zwischen 5,5 und 6,5 und ist insbesondere ungefähr 6. Weiter bevorzugt ist ein Winkel des massiven Konus, ausgehend von Boden des Spalttopfs ungefähr 60°. Die Einhaltung dieser Abmessungen für die massiven Konus bzw. den Spalttopf stellen ebenfalls sehr gute Ergebnisse hinsichtlich einer Lebensdauer des Spalttopfs, insbesondere auch bei Anwendungen mit abrasiven Medien, sicher.

Die Erfindung betrifft ferner eine Magnetkupplung mit einem Innenrotor, einem Außenrotor und einem Spalttopf. Die Magnetkupplung wird vorzugsweise in Rührwerken oder Pumpen, verwendet.

Nachfolgend wird unter Bezugnahme auf die begleitende Zeichnung Ausführungsbeispiele der Erfindung im Detail beschrieben. In der Zeichnung ist:
- Fig. 1: eine schematische Schnittansicht eines Spalttopfs gemäß einem ersten Ausführungsbeispiel der Erfindung,
- Fig. 2: eine schematische Schnittansicht eines Spalttopfs gemäß einem zweiten Ausführungsbeispiel der Erfindung,
- Fig. 3: eine Ansicht in den Spalttopf von Fig. 2,
- Fig. 4: eine Ansicht einer Rückseite des Spalttopfs von Fig. 2,
- Fig. 5: eine perspektivische Ansicht des Spalttopfs von Fig. 2,
- Fig. 6: eine schematische Schnittansicht eines Spalttopfs gemäß einem dritten Ausführungsbeispiel der Erfindung,
- Fig. 7: eine schematische Schnittansicht eines Spalttopfs gemäß einem vierten Ausführungsbeispiel der Erfindung, und
- Fig. 8 bis 12: bevorzugte Beispiele von Wirbelbrecheinrichtungen.

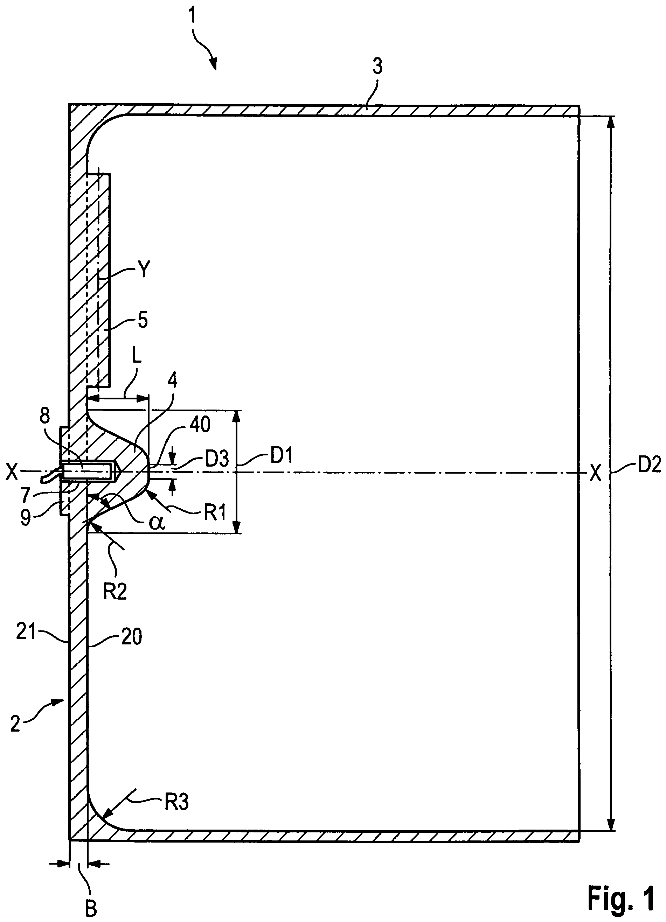

Nachfolgend wird unter Bezugnahme auf Fig. 1 ein Spalttopf 1 einer Magnetkupplung gemäß einem ersten Ausführungsbeispiel der Erfindung im Detail beschrieben.

Wie aus Fig. 1 ersichtlich ist, umfasst der Spalttopf 1 einen Boden 2 und einen zylindrischen Mantel 3, welcher mit dem Boden verbunden ist.

Der Boden 2 umfasst einen massiven Konus 4, welcher an einer Innenseite des Bodens angeordnet ist. Der massive Konus 4 ist in Form eines geraden Kegels gebildet und ist koaxial zu einer Mittelachse X-X des Spalttopfs angeordnet. Der Konus 4 weist eine mit einem Radius R1 abgerundete Spitze auf, wobei an der Spitze eine kreisförmige Abflachung 40 mit einem Durchmesser D3 vorgesehen ist. Der Konus 4 ist in einem Winkel α von ca. 60° bezüglich der Bodeninnenseite 20 gebildet. Der Boden 2 umfasst ferner eine als Längselement ausgebildete Wirbelbrecheinrichtung 5 in Form eines schmalen Quaders mit einer Längsachse Y. Die Wirbelbrecheinrichtung 5 verläuft dabei in radialer Richtung des Spalttopfes und weist sowohl einen Abstand zum Konus 4 als auch zum Mantel 3 auf. Die Wirbelbrecheinrichtung 5 dient insbesondere zum Unterbrechen von evtl. im Betrieb im Inneren des Spalttopfes 1 entstehenden Wirbeln, welche einen verstärkten Verschleiß an der Bodeninnenseite 20 verursachen können. Der Konus 4 weist an seiner Grundfläche einen maximalen Durchmesser D1 auf. Der zylindrische Mantel 3 weist einen Innendurchmesser D2 auf. Dabei ist ein Verhältnis des Innendurchmessers D2 zum Grunddurchmesser D1 in einem Bereich zwischen 5 und 7. Durch das Erfüllen der Ungleichung 5 ≤ D2/D1 ≤ 7 kann eine besonders positive Beeinflussung der Strömung hinsichtlich eines reduzierten Verschleißes erreicht werden. Im ersten Ausführungsbeispiel ist das Verhältnis D2/D1 = 6.

Neben dem ersten Radius R1 an der Spitze des Konus 4 und einem zweiten Radius R2 in einem Übergangsbereich zwischen dem Konus 4 und der Bodeninnenseite 20 ist noch ein dritter Radius R3 am Übergang von der Bodeninnenseite 20 zum Mantel 3 des Spalttopfs vorhanden. Die Radien R1, R2, R3 sind dabei gleich.

Ferner ist ein Verhältnis einer Länge L des Konus 4 in Richtung der Mittelachse X-X des Spalttopfs, ausgehend von der Bodeninnenseite 20 zu einer Dicke B des Bodens 2, zwischen 3 und 4 und beträgt in diesem Ausführungsbeispiel 3,6 (L/B = 3,6).

Wie weiter aus Fig. 1 ersichtlich ist, ist an einer Bodenaußenseite 21 eine Ausnehmung 7 vorgesehen, welche koaxial zu Mittelachse X-X des Spalttopfes eingebracht ist. Die Ausnehmung 7 reicht dabei teilweise in den massiven Konus 4 hinein. Ferner ist an der Bodenaußenseite 21 ein vorspringender Kreisbereich 9 gebildet. Der Kreisbereich 9 dient dabei zur Zentrierung des Spalttopfes. Die Ausnehmung 7 dient zur Aufnahme einer Temperaturmesseinrichtung 8, welche schematisch in Fig. 1 angedeutet ist. Dadurch kann auf einfache Weise eine Temperaturmesseinrichtung in den Spalttopf integriert werden, wobei durch das teilweise Vorsehen der Ausnehmung im massiven Konus 4 insbesondere eine axiale Länge des Spalttopfes klein gehalten werden kann. Somit kann erfindungsgemäß durch das Vorsehen des massiven Konus 4 eine gezielte Strömungsbeeinflussung im Spalttopfinneren erreicht werden. Zusätzlich kann durch das Vorsehen der Wirbelbrecheinrichtung 5 auch das Auftreten von stehenden Wirbeln, welche eine sehr hohe abrasive Kraft aufweisen, vermieden werden. Somit kann erfindungsgemäß der Bildung von Auswaschungen oder anderen Verschleißformen vorgebeugt werden. Hierbei unterstützt auch das Vorsehen von Radien am Übergang zwischen dem massiven Konus 4 und dem Boden bzw. am Übergang vom Boden zum Mantel zusätzlich eine möglichst weiche und verlustfreie Umlenkung des strömenden Mediums, um Verschleißerscheinungen zu minimieren. Ferner werden durch die erfindungsgemäße gezielte Strömungsführung am Boden Strömungsablösungen verhindert, welche im Stand der Technik Unterdruckbereiche erzeugen können, an denen es zu Kavitation und/oder Wirbelbildungen kommen kann.

Es sei ferner angemerkt, dass der Boden vorzugsweise als Einzelteil mittels spanabhebender Verfahren hergestellt wird und dann an den Mantel 3, beispielsweise mittels Schweißen oder einem anderen Verbindungsverfahren befestigt wird.

Nachfolgend werden weitere Ausführungsbeispiele der Erfindung im Detail beschrieben, wobei gleiche bzw. funktional gleiche Teile mit den gleichen Bezugszeichen wie im ersten Ausführungsbeispiel bezeichnet sind.

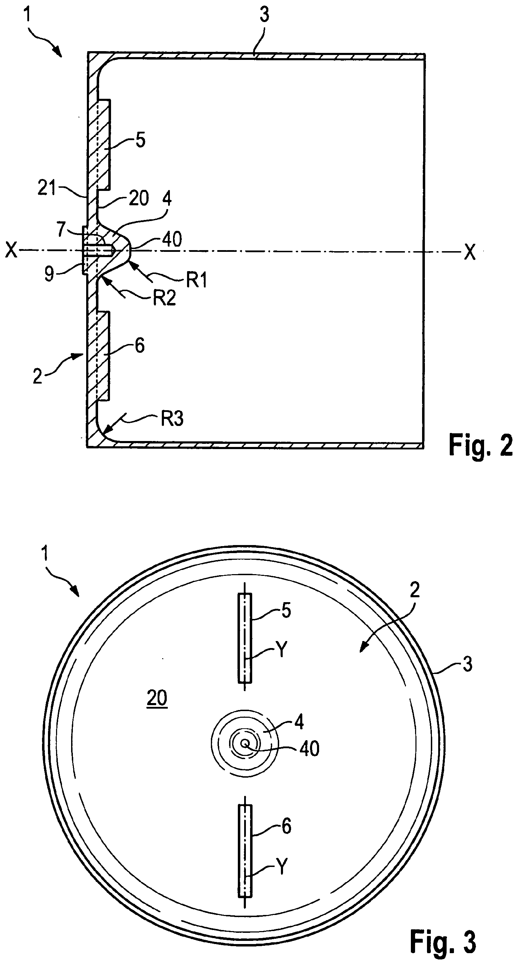

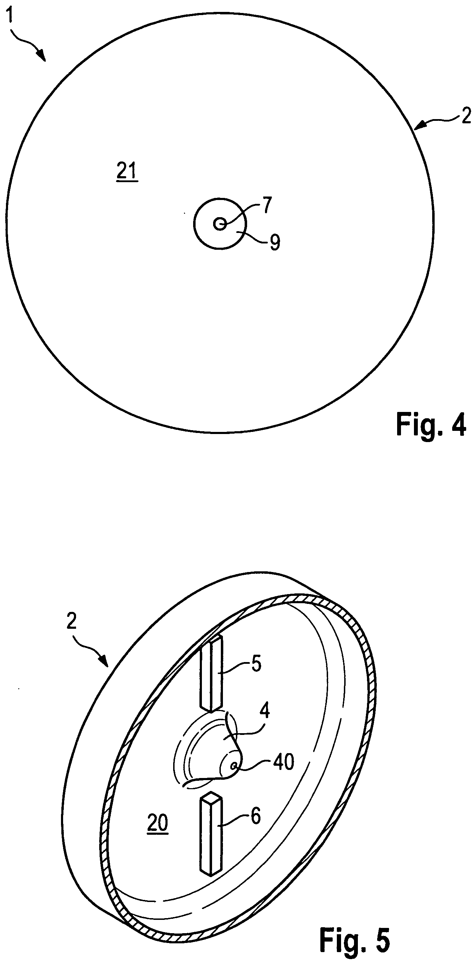

In den Fig. 2 bis 5 ist ein Spalttopf 1 gemäß einem zweiten Ausführungsbeispiel der Erfindung im Detail dargestellt. Das zweite Ausführungsbeispiel entspricht im Wesentlichen dem ersten Ausführungsbeispiel, wobei im Unterschied zum ersten Ausführungsbeispiel beim zweiten Ausführungsbeispiel zwei Wirbelbrecheinrichtungen 5, 6 vorgesehen sind. Die beiden Wirbelbrecheinrichtungen 5, 6 verlaufen jeweils wiederum in radialer Richtung des Spalttopfbodens, wobei die beiden Wirbelbrecheinrichtungen 5, 6 auf einer gemeinsamen Geraden durch die Mittelachse X-X des Spalttopfes liegen. Somit weist der Boden 2 einen symmetrischen Aufbau auf.

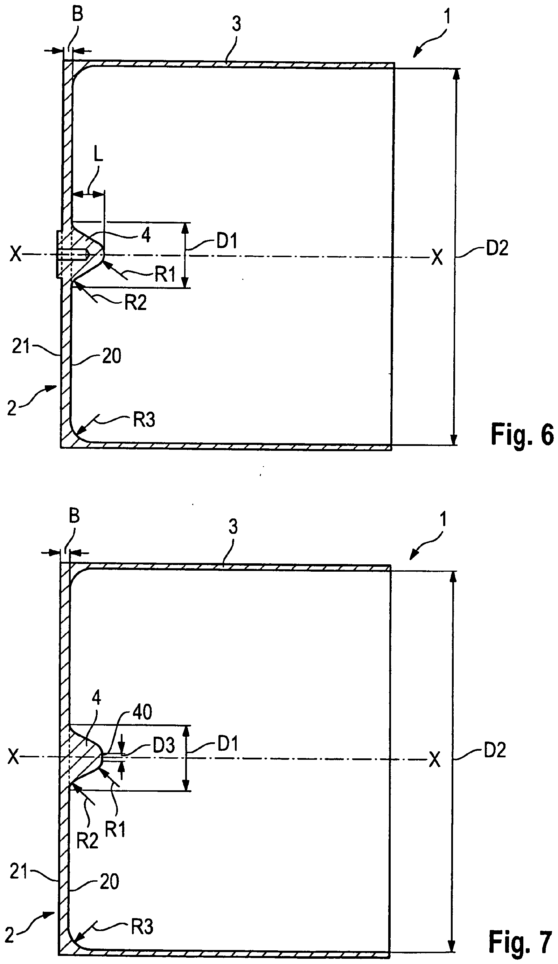

Fig. 6 zeigt ein drittes Ausführungsbeispiel der Erfindung, bei der keine zusätzlichen Wirbelbrecheinrichtungen vorgesehen sind. Ferner ist die abgerundete Spitze des massiven Konus 4 ohne Abflachung durchgehend mit einem ersten Radius R1 gebildet. Somit weist die Spitze des Konus 4 des dritten Ausführungsbeispiels eine Teilkugelform auf.

Fig. 7 zeigt ein viertes Ausführungsbeispiel der Erfindung, wobei bei diesem Ausführungsbeispiel keine Ausnehmung 7 zur Aufnahme einer Temperaturmesseinrichtung vorgesehen ist. Ferner weist der Spalttopf des vierten Ausführungsbeispiels auch keine Wirbelbrecheinrichtungen auf. Somit bestimmt bei diesem Ausführungsbeispiel der massive Konus 4 und die abgerundeten Strömungsübergangsbereiche die Strömungskonfiguration alleine.

Zu allen beschriebenen Ausführungsbeispielen sei angemerkt, dass erfindungsgemäß somit anstatt eines tiefgezogenen Spalttopfes ein Spalttopf mit einem Boden 2 aus einem Massivmaterial verwendet werden kann, welcher insbesondere hinsichtlich einer Lebensdauer und eines Auftretens von Verschleiß große Vorteile gegenüber den üblicherweise verwendeten tiefgezogenen Spalttöpfen aufweist. Insbesondere wird dadurch ein problemloser Einsatz auch in Verbindung mit abrasiven Medien und hohen Drehzahlen der Magnetkupplungsrotoren ermöglicht.

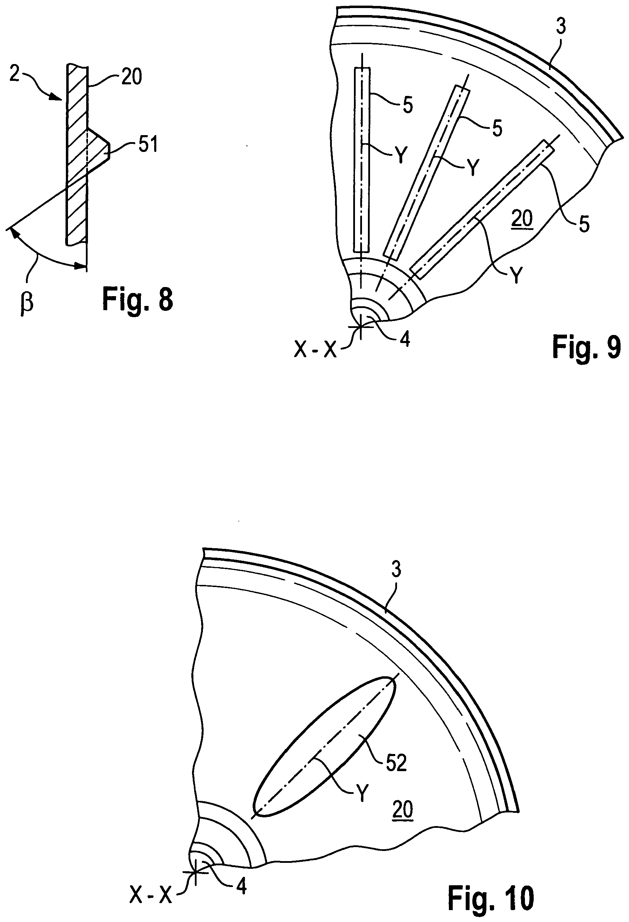

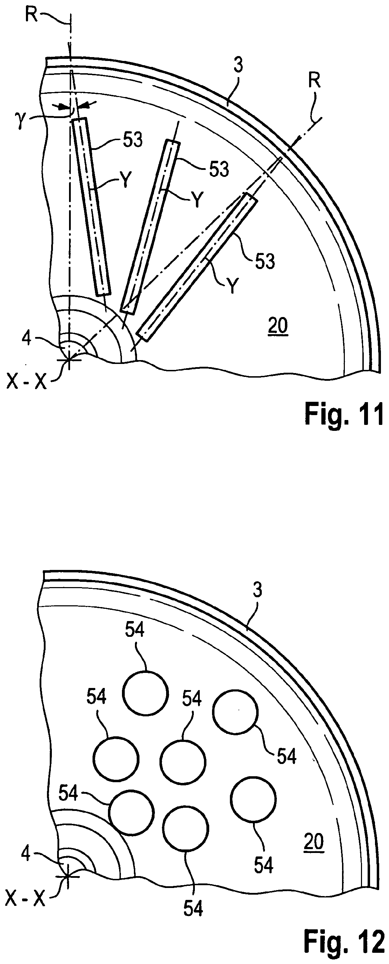

Die Fig. 8 bis 12 zeigen alternative bevorzugte Ausführungsbeispiele von erfindungsgemäßen Wirbelbrecheinrichtungen. In Fig. 8 ist die Wirbelbrecheinrichtung 51 als Längselement mit trapezförmigem Querschnitt ausgebildet. Dabei können auch die Ecken des Trapezes in abgerundeter, strömungsgünstiger Form vorgesehen werden. Die Flanken der trapezförmigen Wirbelbrecheinrichtung 51 sind dabei in einem Winkel β von 45° geneigt. Bei der in Fig. 9 gezeigten Variante sind eine Vielzahl von quaderförmigen Wirbelbrecheinrichtungen 5 gleich verteilt von der Bodeninnenseite 20 vorstehend vorgesehen. Bevorzugt ist dabei eine ungerade Gesamtanzahl der Wirbelbrecheinrichtungen 5. Das in Fig. 10 gezeigte Ausführungsbeispiel zeigt eine Wirbelbrecheinrichtung 52 in Form eines Halbellipsoids. Die in Fig. 11 gezeigte Ausführungsform zeigt Wirbelbrecheinrichtungen 53, welche in einem Winkel γ zu einer Radiallinie R verlaufen. Dadurch sind die Wirbelbrecheinrichtungen 53, welche ebenfalls Längselemente mit einer Längsachse sind, etwas in Strömungsrichtung entsprechend dem Winkel γ gedreht. Bei dem in Fig. 12 gezeigten bevorzugten Ausführungsbeispiel sind die Wirbelbrecheinrichtungen 54 in Form von Zylindern vorgesehen. Dabei kann eine beliebige Anordnung gewählt werden, wobei bevorzugt mehrere Wirbelbrecheinrichtungen 54 auf einer gemeinsamen Kreisbahn um die Mittelachse X-X angeordnet sind. Statt der Zylinderform können die Wirbelbrecheinrichtungen 54 auch eine Vieleckform (regelmäßiger oder unregelmäßiger Polyeder) oder eine Kegelform aufweisen.

### Bezugszeichenliste

- 1: Spalttopf
- 2: Boden
- 3: Mantel
- 4: massiver Konus
- 5, 6: Wirbelbrecheinrichtungen
- 7: Ausnehmung
- 8: Temperaturmesseinrichtung
- 9: vorspringender Kreisbereich
- 20: Bodeninnenseite
- 21: Bodenaußenseite
- 40: kreisförmige Abflachung
- 51: trapezförmige Wirbelbrecheinrichtung
- 52: halbellipsoide Wirbelbrecheinrichtung
- 53: angestellte Wirbelbrecheinrichtung
- 54: zylinderförmige Wirbelbrecheinrichtung

- B: Dicke
- L: Länge
- D1: Grunddurchmesser des Konus
- D2: Innendurchmesser des Spalttopfes
- D3: Durchmesser der Abflachung
- R: Radiallinie
- R1, R2, R3: erster, zweiter, dritter Radius
- X-X: Mittelachse
- Y: Längsachse der Wirbelbrecheinrichtung
- α: Winkel
- β: Winkel
- γ: Winkel

## Patentansprüche

1. Magnetkupplung umfassend einen Spalttopf, wobei der Spalttopf umfasst:
- einen im Wesentlichen zylindrischem Mantelbereich (3) und einen Boden (2),
- wobei der Boden (2) an einer zum Spalttopfinneren gerichteten Bodeninnenseite (20) einen Konus (4) aufweist, welcher koaxial zu einer Mittelachse (X-X) des Spalttopfs ist,
**gekennzeichnet durch**
- wenigstens eine Wirbelbrecheinrichtung (5; 6), welche an der Bodeninnenseite (20) angeordnet ist und welche von der Bodeninnenseite (20) vorsteht,
- wobei die Wirbelbrecheinrichtung eingerichtet ist, eine Wirbelbildung im Betrieb im Inneren des Spalttopfes zu unterbinden,
- wobei der Konus (4) massiv ausgebildet ist, und
- eine Temperaturmessvorrichtung (8), welche zumindest teilweise in einer im massivem Konus (4) an einer Bodenaußenseite (21) vorgesehenen Ausnehmung (7) angeordnet ist.

2. Magnetkupplung nach Anspruch 1, **dadurch gekennzeichnet, dass** die Wirbelbrecheinrichtung (5; 6) ein Längselement, insbesondere ein rechteckiger Block oder ein trapezförmiger Block oder ein Halbellipsoid ist.

3. Magnetkupplung nach Anspruch 2, **dadurch gekennzeichnet, dass** die Wirbelbrecheinrichtung (5; 6) eine Längsachse (Y) aufweist, welche an der Bodeninnenseite (20) in radialer Richtung zur Mittelachse (X-X) verläuft, oder welche in einem Anstellwinkel (γ) zur radialen Richtung verläuft.

4. Magnetkupplung nach Anspruch 2 oder 3, **gekennzeichnet durch** genau zwei Längselemente als Wirbelbrecheinrichtungen (5; 6), welche am Boden des Spalttopfs um 180° einander gegenüberliegen.

5. Magnetkupplung nach Anspruch 1, **dadurch gekennzeichnet, dass** die Wirbelbrecheinrichtung ein Zylinderelement oder ein Kegelelement oder ein Polyeder ist.

6. Magnetkupplung nach Anspruch 1, **dadurch gekennzeichnet, dass** die Wirbelbrecheinrichtung wenigstens eine, in einem Winkel, insbesondere zwischen 15° und 75°, geneigte Fläche aufweist.

7. Magnetkupplung nach einem der vorhergehenden Ansprüche, **dadurch gekennzeichnet, dass** der Konus (4) eine abgerundete Spitze aufweist.

8. Magnetkupplung nach Anspruch 7, **dadurch gekennzeichnet, dass** die abgerundete Spitze einen konstanten ersten Radius (R1) aufweist oder dass die abgerundete Spitze mit einem ersten Radius (R1) gebildet ist und am äußersten Ende der Spitze eine Abflachung (40) aufweist.

9. Magnetkupplung nach Anspruch 1, **dadurch gekennzeichnet, dass** die Ausnehmung (7) koaxial zur Mittelachse (X-X) verläuft und insbesondere teilweise im massiven Konus (4) vorgesehen ist.

10. Magnetkupplung nach einem der vorhergehenden Ansprüche, **dadurch gekennzeichnet, dass** ein Übergangsbereich vom massiven Konus (4) zur Bodeninnenseite (20) mit einem zweiten Radius (R2) gebildet ist und/oder dass ein Übergangsbereich von der Bodeninnenseite (20) zum zylindrischen Mantelbereich (3) mit einem dritten Radius (R3) gebildet ist.

11. Magnetkupplung nach einem der vorhergehenden Ansprüche, **dadurch gekennzeichnet, dass** ein Verhältnis einer Länge (L) des Konus (4) in Richtung der Mittelachse (X-X) ausgehend von der Bodeninnenseite (20) zu einer Dicke (B) des Bodens (2) zwischen 3 und 4 liegt, insbesondere zwischen 3,4 und 3,8 liegt und ferner insbesondere ungefähr 3,6 ist.

12. Magnetkupplung nach einem der vorhergehenden Ansprüche, **dadurch gekennzeichnet, dass** ein Verhältnis eines Innendurchmessers (D2) des Spalttopfes zu einem Grunddurchmesser (D1) des Konus (4) zwischen 5 und 7 liegt, insbesondere zwischen 5,5 und 6,5 liegt und ferner insbesondere ungefähr 6 ist.

## Claims

1. A magnetic coupling comprising a containment shell, the containment shell comprising:
- a substantially cylindrical casing area (3) and a bottom (2),
- wherein the bottom (20) is provided on a bottom inside (20) directed toward the containment shell interior with a cone (4) which is coaxial to a center axis (X-X) of the containment shell,
**characterized by**
- at least one vortex breaking device (5; 6) which is arranged on the bottom inside (20) and which protrudes from the bottom inside (20),
- wherein the vortex breaking device is configured to prevent formation of vortex inside the containment shell,
- wherein the cone is formed solid, and
- a temperature measuring device (8) which is arranged at least in part in a recess (7) provided on a bottom outside (21) in the solid cone (4).

2. Magnetic coupling according to claim 1, **characterized in that** the vortex breaking device (5; 6) is a longitudinal element, particularly a rectangular block or a trapezoidal block or a semi-ellipsoid.

3. Magnetic coupling according to claim 2, **characterized in that** the vortex breaking device (5; 6) has a longitudinal axis (Y) which extends on the bottom inside (20) in radial direction relative to the center axis (X-X) or which extends at an angle of inclination (γ) relative to the radial direction.

4. Magnetic coupling according to claim 2 or 3, **characterized by** exactly two longitudinal elements as vortex breaking devices (5; 6) which are opposite to each other on the bottom of the containment shell by 180°.

5. Magnetic coupling according to claim 1, **characterized in that** the vortex breaking device is a cylinder element or a cone element or a polyhedron.

6. Magnetic coupling according to claim 1, **characterized in that** the vortex breaking device comprises at least one surface inclined at an angle, particularly between 15° and 75°.

7. Magnetic coupling according to any one of the preceding claims, **characterized in that** the cone (4) has a rounded tip.

8. Magnetic coupling according to claim 7, **characterized in that** the rounded tip has a constant first radius (R1) or that the rounded tip is formed with a first radius (R1) and has a flattening (40) on the outermost end of the tip.

9. Magnetic coupling according to claim 1, **characterized in that** the recess (7) extends in coaxial direction relative to the center axis (X-X) and is provided particularly in part in the solid cone (4).

10. Magnetic coupling according to any one of the preceding claims, **characterized in that** a transition area from the solid cone (4) to the bottom inside (20) is formed with a second radius (R2) and/or that a transition area from the bottom inside (20) to the cylindrical casing area (3) is formed with a third radius (R3).

11. Magnetic coupling according to any one of the preceding claims, **characterized in that** a ratio of a length (L) of the cone (4) in the direction of the center axis (X-X), starting from the bottom inside (20), to a thickness (B) of the bottom (2) is between 3 and 4, particularly between 3.4 and 3.8 and is further particularly about 3.6.

12. Magnetic coupling according to any one of the preceding claims, **characterized in that** a ratio of an inner diameter (D2) of the containment shell to a base diameter (D1) of the cone (4) is between 5 and 7, particularly between 5.5 and 5.6, and further particularly about 6.

## Revendications

1. Accouplement magnétique comprenant une chemise d'entrefer, dans lequel la chemise d'entrefer comprend :
- une zone formant enveloppe (3) sensiblement cylindrique et un fond (2),
- dans lequel le fond (2) présente, au niveau d'un côté intérieur de fond (20) dirigé vers l'intérieur de chemise d'entrefer, un cône (4), qui est coaxial par rapport à un axe médian (X-X) de la chemise d'entrefer,
**caractérisé par**
- au moins un système déflecteur antitourbillon (5 ; 6), qui est disposé au niveau du côté intérieur de fond (20) et qui fait saillie du côté intérieur de fond (20),
- dans lequel le système déflecteur antitourbillon est mis au point pour empêcher une formation de tourbillon lors du fonctionnement à l'intérieur de la chemise d'entrefer,
- dans lequel le cône (4) est réalisé de manière massive, et
- un dispositif de mesure de température (8), qui est disposé au moins en partie dans un évidement (7) prévu dans le cône (4) massif au niveau d'un côté extérieur de fond (21).

2. Accouplement magnétique selon la revendication 1, **caractérisé en ce que** le système déflecteur antitourbillon (5 ; 6) est un élément longitudinal, en particulier un bloc rectangulaire ou un bloc de forme trapézoïdale ou une semi-ellipse.

3. Accouplement magnétique selon la revendication 2, **caractérisé en ce que** le système déflecteur antitourbillon (5 ; 6) présente un axe longitudinal (Y), qui s'étend au niveau du côté intérieur de fond (20) dans une direction radiale par rapport à l'axe médian (X-X), ou qui s'étend selon un angle d'attaque (γ) par rapport à la direction radiale.

4. Accouplement magnétique selon la revendication 2 ou 3, **caractérisé par** précisément deux éléments longitudinaux en tant que systèmes déflecteurs antitourbillon (5 ; 6), qui se font face l'un l'autre à 180° au niveau du fond de la chemise d'entrefer.

5. Accouplement magnétique selon la revendication 1, **caractérisé en ce que** le système déflecteur antitourbillon est un élément cylindrique ou un élément conique ou un polyèdre.

6. Accouplement magnétique selon la revendication 1, **caractérisé en ce que** le système déflecteur antitourbillon présente au moins une surface inclinée selon un angle, en particulier entre 15° et 75°.

7. Accouplement magnétique selon l'une quelconque des revendications précédentes, **caractérisé en ce que** le cône (4) présente une pointe arrondie.

8. Accouplement magnétique selon la revendication 7, **caractérisé en ce que** la pointe arrondie présente un premier rayon (R1) constant, ou que la pointe arrondie est formée avec un premier rayon (R1) et présente, au niveau de l'extrémité le plus à l'extérieur de la pointe, une zone aplatie (40).

9. Accouplement magnétique selon la revendication 1, **caractérisé en ce que** l'évidement (7) s'étend de manière coaxiale par rapport à l'axe médian (X-X) et est prévu en particulier en partie dans le cône (4) massif.

10. Accouplement magnétique selon l'une quelconque des revendications précédentes, **caractérisé en ce qu'**une zone de passage depuis le cône (4) massif vers le côté intérieur de fond (20) est formée avec un deuxième rayon (R2), et/ou qu'une zone de passage depuis le côté intérieur de fond (20) vers la zone formant enveloppe (3) cylindrique est formée avec un troisième rayon (R3).

11. Accouplement magnétique selon l'une quelconque des revendications précédentes, **caractérisé en ce qu'**un rapport entre une longueur (L) du cône (4) en direction de l'axe médian (X-X) en partant du côté intérieur de fond (20) et une épaisseur (B) du fond (2) se situe entre 3 et 4, en particulier entre 3,4 et 3,8, et est en outre en particulier approximativement de 3,6.

12. Accouplement magnétique selon l'une quelconque des revendications précédentes, **caractérisé en ce qu'**un rapport entre un diamètre intérieur (D2) de la chemise d'entrefer et un diamètre de base (D1) du cône (4) se situe entre 5 et 7, en particulier entre 5,5 et 6,5 et est en outre en particulier approximativement de 6.
